Europäisches Patentamt

European Patent Office

Office européen des brevets

(11) Veröffentlichungsnummer: **0 135 853**
A2

# EUROPÄISCHE PATENTANMELDUNG

(21) Anmeldenummer: 84110476.3

(22) Anmeldetag: 04.09.84

(51) Int. Cl.⁴: **A 01 N 53/00**, A 01 N 25/34

(30) Priorität: 17.09.83 DE 3333657

(43) Veröffentlichungstag der Anmeldung: 03.04.85
Patentblatt 85/14

(84) Benannte Vertragsstaaten: **BE DE FR GB IT NL SE**

(71) Anmelder: **BAYER AG, Konzernverwaltung RP
Patentabteilung, D-5090 Leverkusen 1 Bayerwerk (DE)**

(72) Erfinder: **Stendel, Wilhelm, Dr., In den Birken 55,
D-5600 Wuppertal 1 (DE)**
Erfinder: **Voege, Herbert, Dr., Martin-Buber-Strasse 41,
D-5090 Leverkusen 3 (DE)**

(54) **Pyrethroide enthaltende Formkörper zur Bekämpfung von Ektoparasiten.**

(57) Die Erfindung betrifft Polyvinylharz-, Polyacrylat-, Epoxid-
harz-, Cellulose-, Polyamid- und Polyester-Formkörper, die Pyrethroide enthalten, Verfahren zur Herstellung dieser Formkörper und ihre Verwendung zur Bekämpfung von Ektoparasiten
und Lästlingen, insbesondere in der Tierhaltung.

EP 0 135 853 A2

- 1 -                           0135853

BAYER AKTIENGESELLSCHAFT          5090 Leverkusen, Bayerwerk
Konzernverwaltung RP
Patentabteilung                   Ad/ABc


Pyrethroide enthaltende Formkörper zur Bekämpfung von
Ektoparasiten

Die Erfindung betrift Polyvinylharz-, Polyacrylat-,
Epoxidharz-, Cellulose-, Polyamid- und Polyester-Formkörper, die Pyrethroide enthalten, Verfahren zur Herstellung dieser Formkörper und ihre Verwendung zur Bekämpfung von Ektoparasiten und Lästlingen, insbesondere
in der Tierhaltung.

Formkörper mit verzögerter Wirkstoffabgabe sind für verschiedene Zwecke der Schädlingsbekämpfung bereits entwickelt worden. Die Formkörper sind in der Regel aus harzartigen Massen geformt, die den Wirkstoff enthalten, und
zur Bekämpfung von Ektoparasiten und Lästlingen, insbesondere in der Tierhaltung, werden diese in Gestalt
von Ringen, Bändern und Ohrmarken über verschiedene
Applikationssysteme am zu schützenden Tier angebracht.
Häufig werden die Wirkstoffe auch in Marken eingebracht,
die in einer Doppelfunktion zur Identifizierung der
Tiere dienen. Derartige Identifizierungsmarken und ihre
Applikatoren werden beispielsweise in den US-PSen


Le A 22 538

3 955 580, 3 916 904, 3 942 480, 3 952 438, 3 952 439, 3 979 847, 3 987 570, 4 000 744, RE 29 536, 4 160 335, 3 357 122, 3 334 434, 3 552 051, 3 675 357, 3 694 949, 3 731 414, 3 867 777, 3 896 572, 3 526 987 und 3 512 289 genannt.

Mit Fenvalerate, Chlorpyrifos, Stirofos und Ronnel imprägnierte Ohrmarken für Rinden werden in J. ECON. Entomology $\underline{71}$ (5), 764-765, Oktober 1978 beschrieben.

Die Aufgabe der Erfindung besteht darin, die bekannten auf dem oben geschilderten Prinzip beruhenden Systeme hinsichtlich Wirkung und Wirkungsdauer zu verbessern.

Die Aufgabe wird erfindungsgemäß gelöst durch Polyvinylharz-, Polyacrylat-, Epoxyharz-, Cellulose-, Polyamid- und Polyester-Formkörper, die 3'-Phenoxy-4'-fluor-$\alpha$-cyanbenzyl-2,2-dimethyl-3-(2"-p-chlorphenyl-2"-chlorvinyl)-cyclopropancarboxylat, 3'-Phenoxy-4'-fluor-$\alpha$-cyanbenzyl-2,2-dimethyl-3-(2",2"-dichlorvinyl)-cyclopropancarboxylat und/oder Pentabenzyl-permethrinsäureester oder deren isomere Formen enthalten.

Die erfindungsgemäßen Formkörper zeigen eine gegenüber dem Stand der Technik verbesserte Wirkung gegen Fliegen, Zecken, Milben, Flöhe und andere Ektoparasiten und Lästlinge und lassen sich bevorzugt in der Tierhaltung, insbesondere in der Rinderhaltung einsetzen.

Die erfindungsgemäßen Wirkstoffe enthalten 0,5 bis 20 Gew.-%, bezogen auf den Formkörper, eines oder mehrerer der obengenannten Pyrethroide. Bevorzugt liegt der Wirk-

Le A 22 538

- 3 -

0135853

stoff in Konzentrationen von 1 bis 10 Gew.-% in den
Formkörpern vor.

Erfindungsgemäße Formkörper sind Ohrmarken, Halsbänder,
Halsbandmarken, Schwanzbänder, Hornbänder, Gliedmaßenbänder und Halfter.

Für die Herstellung die erfindungsgemäßen Formkörper
können Polyvinylharze, Polyacrylate, Epoxyharze, Cellulose, Cellulosederivate, Polyamide und Polyester verwendet
werden, die mit den obengenanten Wirkstoffen ausreichend
verträglich sind. Die Polymeren müssen eine ausreichende
Festigkeit und Biegsamkeit haben, um beim Formen in ein
Band oder eine Ohrmarke nicht zu reißen oder brüchig zu
werden. Sie müssen von ausreichender Halbarkeit sein, um
gegen normale Abnutzung beständig zu sein. Außerdem
müssen die Polymeren eine ausreichende Wanderung der
Wirkstoffe an die Oberfläche des Formkörpers zulassen.
Diese Eigenschaften werden insbesondere von festen Polyvinylharzen erfüllt, d.h. von Polymerisaten, die durch
Polymerisaten einer Vinyldoppelbindung gebildet werden.

Typische Vinylharze sind beispielsweise Polyvinylhalogenide, wie Polyvinylchlorid, Polyvinylchlorid-Vinylacetat und Polyvinylfluorid; Polyacrylat- und Polymethacrylatester, wie Polymethylacrylat und Polymethylmethacrylat; und Polyvinylbenzole, wie Polystyrol und Polyvinyltoluol.

Für die Herstellung der erfindungsgemäßen Formkörper
auf der Basis Polyvinylharz sind die Weichmacher geeig-

Le A 22 538

net, die üblicherweise zum Weichmachen von festen Vinylharzen verwendet werden. Der verwendete Weichmacher hängt von dem Harz und seiner Verträglichkeit mit dem Weichmacher ab. Geeignete Weichmacher sind beispielsweise Ester von Phosphorsäure, wie Tricresylphosphat, Ester von Phthalsäure, wie Dimethylphthalat und Dioctylphthalat, und Ester von Adipinsäure, wie Diisobutyladipat. Es können auch andere Ester, wie die Ester von Azelainsäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle verwendet werden. Die Menge des Weichmachers beträgt etwa 10 bis 50 Gew.-%, vorzugsweise etwa 20 bis 45 Gew.-% der gesamten Zusammensetzung.

In den Formkörpern können noch weitere Bestandteile, wie Stabilisierungsmittel, Schmiermittel, Füllstoffe und Färbematerialien, enthalten sein, ohne daß dadurch die grundlegenden Eigenschaften der Zusammensetzung verändert werden. Geeignete Stabilisierungsmittel sind Antioxydationsmittel und Mittel, die den Formkörper vor ultravioletter Strahlung und unerwünschtem Abbau während der Bearbeitung, wie Strangpressen schützen. Einige Stabilisierungsmittel, wie epoxydierte Sojabohnenöle, dienen außerdem als sekundäre Weichmacher. Als Schmiermittel können beispielsweise Stearate, Stearinsäure und Polyethylen mit niedrigem Molekulargewicht verwendet werden. Diese Bestandteile können in einer Konzentration bis zu etwa 20 Gew.-% der gesamten Zusammensetzung verwendet werden.

Le A 22 538

0135853

Bei der Herstellung der erfindungsgemäßen Formkörpern auf Vinylsäurebasis werden die verschiedenen Bestandteile nach bekannten Mischverfahren trocken gemischt und nach bekannten Strangpreß- oder Spritzgußverfahren formgepreßt.

Die Wahl des Verarbeitungsverfahrens zur Herstellung der erfindungsgemäßen Formkörper richtet sich technisch grundsätzlich nach den rheologischen Eigenschaften des Formkörpermateriales und der Form des gewünschten Gebildes. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenen rheologischen Zuständen unterteilen. Danach kommen für viskose Formkörpermaterialien Gießen, Pressen, Spritzen und Auftragen und für elastoviskose Polymere Spritzgießen, Strangpressen (Extrudieren), Kalandrieren, Walzen und gegebenenfalls Kanten in Frage. Nach Art der Formgebung eingeteilt, lassen sich die erfindungsgemäßen Formkörper durch Gießen, Tauchen, Pressen, Spritzgießen, Extrudieren, Kalandrieren, Prägen, Biegen, Tiefziehen etc. herstellen.

Diese Verarbeitungsverfahren sind bekannt und bedürfen keiner näheren Erklärung. Im Prinzip gelten für Polymere wie Polyamide und Polyester die Erläuterungen, die oben beispielhaft für Polyvinylharze gemacht wurden.

Die erfindungsgemäßen Formkörper können mit Erfolg gengen zahlreich schädliche Parasiten (Ektoparasiten)

Le A 22 538

aus der Klasse der Arachniden und der Klasse der Insekten eingesetzt werden.

Als Ektoparasiten der Klasse der Arachniden, die in
tropischen, subtropischen und gemäßigten Breiten eine
große Rolle spielen, seien beispielsweise genannt
aus der Familie der Ixodidae: die australische und südamerikanische einwirtige Rinderzecke (Boophilus
microplus), die afrikanische einwirtige Rinderzecke
(Boophilus decoloratus), die mehrwirtigen, an Nutz-
und Haustieren parasitierenden Zecken wie Rhipicephalus
appendiculatus, Rhipicephalus evertsi, Amblyomma
variegatum, Amblyomma hebraeum, Amblyomma cayennense,
Hyalomma truncatum, Dermacentor variabilis und Ixodes
ricinus und aus der Familie der Gamasidae: die Rote
Vogelmilbe (Dermanyssus gallinae).

Aus der Familie Democidae: die Haarbalgmilbe Demodex
follianlorum; aus der Familie Sarcoptidae: die Grabmilben
der Gattungen Sarcoptes und Notoedres und aus der Familie
der Psoroptidae: Milben der Gattungen Psoroptes,
Chorioptes und Otodectes.

Als Ektoparasiten aus der Klasse der Insekten seien
beispielsbeise genannt:
Aus der Ordnung der Dipteria (Zweiflügler) folgende
Familien:

Le A 22 538

| Ceratopogonidae | mit der Gattung | Culicoides |
| Simuliidae | " " " | Simulium |
| Psychodidae | " " " | Phlebotomus |
| Culicidae | mit den Gattungen | Culex, Aedes, Anopheles |
| Tabanidae | " " " | Tabanus, Haematopota, Chrysops, Pangonia |
| Oestridae | " " " | Gastrophilus, Oestrus, Hypoderma, Dermatobia |
| Anthomyidae | " " " | Musca, Stomoxys, Lyperosia, Glossina |
| Tachinidae | " " " | Lucilia, Calliphora, Chrysomya, Phormia, Callitroga, Cordylobia, Booponus |
| Sarcophagae | " " " | Sarcophaga, Wohlfahrtia |
| Hippoboscidae | " " " | Hippobosca, Melophagus, Pseudolynchia |

Aus der Ordnung der Phthiraptera (Läuse) folgende Familien:

| Haematopinidae | mit der Gattung | Haematopinus |
| Linognathidae | mit den Gattungen | Linognatus, Solenopotes |
| Pediculidae | " " " | Pediculus, Phthirus |

Ferner aus der Superfamilie der Ischnocera die Gattungen: Damalinia, Trichodectes, Felicola, Columbicola
aus der Superfamilie Amblycera die Gattungen Menopon, Menacanthus
sowie aus der Ordnung der Siphonaptera (Flöhe) die Gattungen Ctenocephalides, Ceratophyllus, Pulex, Echidnophaga.

<u>Le A 22 538</u>

Im Laufe der Zeit sind Zecken und Fliegen gegen die als Bekämpfungsmittel bisher verwendeten Phosphorsäureester und Carbamate resistent geworden, so daß der Bekämpfungserfolg in vielen Gebieten in wachsendem Maße in Frage gestellt wird. Zur Sicherung einer wirtschaftlichen Viehhaltung in den Befallsgebieten besteht ein dringender Bedarf an Mitteln, mit denen alle Entwicklungsstadien, bevorzugt die Adulten bekämpft werden können.

Die in den erfindungsgemäßen Formkörpern inkorporierten Wirkstoffe sind in Form ihrer Isomerengemische unter den Namen Flumethrin, Cyfluthrin und Fenfluthrin bekannt. Die Formkörper enthalten diese Wirkstoffe als Isomerengemisch aller isomeren Komponenten oder in Form eines einzigen Isomers oder eines Gemisches aus zwei oder mehreren Isomeren.

**Beispiel**/Ohrmarke aus Polyvinylchlorid enthaltend Permethrinsäurepentafluorbenzylester (Fenfluthrin)

Test an adulten Fliegen / Stomoxys calcitrans, Musca autumnalis

Je 10 adulte Fliegen (Stomoxys calcitrans, Musca autumnalis) werden in durchsichtige Behälter (20 x 20 x 35 cm) überführt, in die vorher ein Stück (3 cm$^2$) einer wirkstoffhaltigen Rinderohrmarke gebracht worden war.

Le A 22 538

Die Fliegen können direkten Kontakt mit dem Ohrmarkenstück aufnehmen = direkter Kontakt oder sie können mit dem mit einem Sieb abgedeckten Ohrmarkenstück nicht direkt in Kontakt kommen = indirekter Kontakt.

Zu bestimmten Zeiten nach Einbringen der Fliegen in die Behälter wird die Zahl der irreversibel geschädigten Fliegen (adynamische Phase) festgestellt. Der Zeitpunkt des Eintritts dieser Kriterien wird als Maß für die Wirkung benutzt.

Aus der folgenden Zusammenstellung geht die überlegene Wirkung von Fenfluthrin-haltigen Ohrmarken gegenüber einer bekannten Verbindung hervor.

Eintritt der adynamischen Phase bei Adulten von Stomoxys calcitrans und Musca autumnalis / Stunden nach Einsatz der Fliegen.

|  | Eintritt der adynamischen Phase / Stunden nach Einsetzen der Fliegen | | | |
|  | direkter Kontakt | | indirekter Kontakt | |
|  | Stomoxys calcitrans | Musca autumnalis | Stomoxys calcitrans | Musca autumnalis |
| --- | --- | --- | --- | --- |
| bekannter Wirkstoff Fenvalerate | 2 | 6 | 6 | 6 |
| Permethrinsäure-pentafluorbenzyl-ester (=Fenfluthrin) | 1 | 1 | 2 | 4 |

Le A 22 538

Patentansprüche

1. Polyvinylharz-, Polyacrylat-, Epoxyharz-, Cellulose-, Cellulosederivat-, Polyamid- und Polyester-Formkörper enthaltend 3'-Phenoxy-4'-fluor- $\alpha$ -cyan-benzyl-2,2-dimethyl-3-(2"-p-chlorphenyl-2"-chlorvinyl)-cyclopropancarboxylat, 3'-Phenoxy-4'-fluor- $\alpha$ -cyan-benzyl-2,2-dimethyl-3-(2",2"-dichlorvinyl)-cyclopropan-carboxylat und/oder Pentafluorbenzyl-permethrinsäure-ester oder deren isomere Formen.

2. Formkörper nach Anspruch 1, enthaltend 0,5 bis 20 Gew.-%, bezogen auf den Formkörper, eines oder mehrerer der in Anspruch 1 genannten Pyrethroide.

3. Formkörper nach Anspruch 1, enthaltend 1 bis 10 Gew.-%, bezogen auf den Formkörper, eines oder mehrerer der in Anspruch 1 genannten Pyrethroide.

4. Formkörper nach Anspruch 1 in Gestalt von zur Ektoparasitenbekämpfung in der Tierhaltung verwendeten Ohrmarken, Halsbändern, Halsbandmarken, Schwanzbändern, Gliedmaßenbändern und Halftern.

5. Ohrmarke nach Anspruch 4, enthaltend Pentafluorbenzyl-permethrinsäureester.

6. Ohrmarken nach Anspruch 4 enthaltend Gemische der in Anspruch 1 genannten Wirkstoffe.

Le A 22 538

0135853

7. Verfahren zur Herstellung der Formkörper nach Anspruch 1, dadurch gekennzeichnet, daß man Pentafluorbenzyl-permethrinsäureester oder einen anderen der in Anspruch 1 genannten Wirkstoffe in ein Polyvinylharz-, Polyacrylat-, Epoxy-, Cellulose-, Polyamid- oder Polyestergranulat, -pulver oder dergl. einarbeitet, gegebenenfalls auch durch Mischen der Wirkstoffe mit den Monomerenkomponenten und anschließende Polymerisation der Mischung, und die wirkstoffhaltigen Polymerisate durch Extrusion oder Spritzguß zu einem Formkörper verformt.

8. Verfahren zur Herstellung der Formkörper nach Anspruch 6, dadurch gekennzeichnet, daß man wirkstoffhaltige Polymerisate zu einem flächigen Formkörper verformt und aus diesem den gebrauchsfertigen Formkörper herausschneidet oder -stanzt.

9. Verwendung der Formkörper gemäß Anspruch 1 zur Bekämpfung von Ektoparasiten und Lästlingen.

10. Verwendung der Formkörper gemäß Anspruch 1 zur Bekämpfung von Ektoparasiten und Lästlingen in der Tierhaltung.

Le A 22 538